# EUROPEAN PATENT SPECIFICATION

(11) **EP 4 531 579 B1**
(45) Date of publication and mention of the grant of the patent: **26.08.2026**
(21) Application number: 23728139.9
(22) Date of filing: 24.05.2023
(51) Int. Cl.: A22B 5/00, A22C 17/00, A22C 21/00

(54) **METHOD, DEVICE AND SYSTEM FOR MEASURING A POULTRY SLAUGHTER PRODUCT**
VERFAHREN, VORRICHTUNG UND SYSTEM ZUR MESSUNG EINES GEFLÜGELSCHLACHTPRODUKTS
PROCÉDÉ, DISPOSITIF ET SYSTÈME DE MESURE D'UN PRODUIT DE BOUCHERIE DE TYPE VOLAILLE

(30) Priority: 30.05.2022 NL 2032013
(43) Date of publication of application: 09.04.2025
(73) Proprietor: Marel Poultry B.V., 5831 AV Boxmeer (NL)
(72) Inventor: PANHUIS, Sjoerd, 5831 AV BOXMEER (NL); HOENSELAAR, Ties Antoon Henricus, 5831 AV BOXMEER (NL)
(74) Representative: Algemeen Octrooi- en Merkenbureau B.V.
(86) International application number: PCT/NL2023/050298
(87) International publication number: WO 2023/234773

(56) References cited:
- WO-A1-2018/167089
- TW-B- I 678 156
- US-A1- 2016 029 648
- NYALALA INNOCENT ET AL: "On-line weight estimation of broiler carcass and cuts by a computer vision system", POULTRY SCIENCE, vol. 100, no. 12, 1 December 2021 (2021-12-01), Oxford, pages 1 - 13, XP093306634, ISSN: 0032-5791, DOI: 10.1016/j.psj.2021.101474

## Description

The invention relates to a method of measuring a poultry slaughter product. The invention also relates to a device and system for measuring such a poultry slaughter product.

The scientific paper *"*On-line weight estimation of broiler carcass and cuts by a computer vision system" by Nyalala Innocent et al. is considered to be the closest prior art. It discloses a method and system for estimating the weight of a poultry slaughter product (broiler carcass) in a production line. The system utilizes a stationary contactless distance meter in the form of a Kinect V2 depth sensor. Broiler carcasses are transported on hangers past the sensor, which captures depth images. From these depth images, size-related features such as the projected area are extracted. These features are then used as input for a regression model to determine a final size-related parameter, namely the weight of the carcass. Said document discloses the preamble of claim 1.

United States patent application US 2016/029648 A1 is directed to a device for volumetrically measuring a slaughter animal body object.

WO2017/188812 A1 relates to a system and method for measuring a shoulder joint position of a carcass part of slaughtered poultry. The shoulder joint is the joint which in living poultry connects the wings to the body of the poultry. The shoulder joint position is an indication of the overall size of the carcass part. Said positions are measured by a mechanical contact member engaging the shoulder joints.

Taiwanese patent TW I 678 156 B and international patent application WO 2018/167089 A1 are acknowledged as further prior art.

Although the known system and method function satisfactorily in practice, they can be further improved.

Therefore, it is an object of the present invention to provide an improved method, device and system for measuring a poultry slaughter product. Therefore, it is another object of the present invention to provide a method, device and system for measuring a poultry slaughter product held by a carrier of a transport device, having less restraints regarding the orientation of the poultry slaughter product during measuring.

It is another object of the present invention to provide a method, device and system for measuring a poultry slaughter product, in which the measuring is performed in a more hygienic manner. It is a further object of the present invention to provide a method, device and system for measuring a poultry slaughter product, in which the measurement data are such that they can be used for more purposes.

One or more of the objects are achieved by the method and/or device and/or system according to the present invention. The invention provides a method of measuring a poultry slaughter product according to claim 1.

The invention further provides a measuring device as defined in claim 12 and a system as defined in claim 13.

An effect of the method, device and system according to the invention is that using the contactless distance meter, the parameter of the slaughter product may be determined in an efficient and relatively easy manner. The measurement is also more hygienic as a result of the contactless nature of the measurement. Also, the measured at least three distances can be used for a variety of purposes since using such measurements a contour of the product passing the measuring device may be determined, for example, which may provide information on a size of the product, or on the state or quality of the product, for example. Further, since the measurement is contactless, the exact orientation of the slaughter product during the measurement may be less relevant.

The carriers are in the form of cones, for poultry front halves. The carriers may be rotatably provided in such a manner that an orientation of the poultry slaughter product can be changed during the transporting thereof. In an embodiment, the transport device is arranged to let the poultry slaughter product pass the measuring device in a vertical orientation, preferably head-down.

In an embodiment, said step a) of measuring is executed using a laser distance meter. So, the contactless distance meter of the measuring device may be, or at least comprise, a laser distance meter. The laser distance meter may be configured as a point laser meter or as a line laser meter and/or may use a red laser beam, so having a wavelength in the range of 630 nm to 670 nm.

The measured distances at the at least three different locations may be measured successively in time by the contactless distance meter. So, in a related embodiment, said step a) comprises successively measuring said distances at said at least three different locations on the slaughter product as a consequence of the slaughter product passing the measuring device during the transporting by means of the transport device. The contactless distance meter of the measurement device may thus be configured to execute at least three distance measurements successively, on one and the same poultry slaughter product passing the measuring device. As a result of the movement of the slaughter product past the measurement device in combination with the execution of successive measurements, a plurality of measurements lying on the same line may be performed. An amount of measurements on one product may depend on a frequency of the measurements by the measuring device and on a speed of the poultry product passing the measuring device in the transport direction. An amount of measurements on one product may in embodiments thus be in a range of tens up to thousands of measurements. The higher the amount, the more accurate the contour of the product may be measured since any interpolation between two consecutive measurements plays a smaller role in the determined parameter. So, in an embodiment, the transport device may be operatively connected to the control unit of the measuring device, for the purpose of providing carrier speed related information to the control unit. In an embodiment, a carrier speed may be given and set in the control unit, for example in case that such a speed is constant over time.

Alternatively, the at least three distances may be measured at the same time by a contactless distance meter configured to measure at least three different points on the product, such as is the case with a line laser meter.

In an embodiment, step a) may be triggered by a measured distance falling below a predetermined upper distance threshold. In such an embodiment, the measuring device may continuously perform measurements, wherein the upper distance threshold, which may be a distance between the distance meter and some position on the carrier, triggers measurements of step a). The upper distance threshold may further form a base value to which measured distances may be compared for the purpose of determining the parameter.

For the purpose of step b), the parameter is a size-related parameter relating to a size of the slaughter product. The size-related parameter is preferably related to a cross-sectional area of the slaughter product, preferably parallel to the transport direction. The larger the cross-sectional area, the larger the size. Using such a laser distance meter, the plurality of distances measured forms a highly suitable basis for determining such a size-related parameter related to a cross-sectional area of the slaughter product. Alternatively, the parameter may be a functional parameter such as a quality-related parameter.

Said step b) comprises determining a size-related parameter which at least partly depends on a pre-determined reference parameter relating to a size, preferably relating to a cross-sectional area, of the carrier holding the slaughter product. Said reference parameter is subtracted from a mentioned size-related parameter, determined during step b), so that as a result a parameter relating to the size, preferably a cross-sectional area of the poultry slaughter product as such can be determined. Such a pre-determined reference parameter relating to the carrier is determined by letting an empty carrier pass the measuring device and performing measurements analogue to the measurements of step a), and determining said pre-determined reference parameter therefrom.

In an embodiment, at least two classes, preferably three or more such as five classes, are defined of consecutive parameter ranges, the method further comprising the step d) of determining to which of said at least two classes the slaughter product belongs, based on the parameter determined according to step b). The classes may represent different sizes, such as including 'small', 'medium' and 'large' of the slaughter product, for example. This way, a slaughter product which has been subject to the measuring, can be allocated to one of the classes. For example, processing actions such as skinning, cutting and fillet harvesting, can then be tuned to the different classes so as to improve a quality, or effectiveness, of the processing actions.

In an embodiment, step a) is executed using a plurality, preferably two or three, of said contactless distance meters, preferably laser distance meters, preferably wherein each of the plurality of contactless distance meters is oriented under a different angle, relative to the transport direction, with respect to the slaughter product. In an embodiment, step a) is executed using at least two laser distance meters, a first of the at least two laser distance meters being oriented under an angle having a component in the transport direction while a second of the at least two laser distance meters being oriented under an angle having a component opposite to the transport direction. This may improve an accuracy of the measurements, or, in other words, of the determined parameter.

In an embodiment, the measuring device is positioned along the transport trajectory upstream of a processing device, wherein a downstream measuring device is positioned along the transport trajectory downstream of the processing device,
the method comprising the further steps of:
   a1) measuring distances, using a downstream contactless distance meter of the downstream measuring device, between the downstream distance meter and the slaughter product, at at least three different locations on the slaughter product, preferably the same locations as for the purpose of step a);
   b1) determining a parameter of the slaughter product from the measured distances of step a1);
the method further comprising the step:
   c) determining a quality-related parameter of the slaughter product relating to the execution of a processing action on the slaughter product by the processing device, which quality-related parameter at least partly depends on the respective parameters determined in step b) and in step b1).

By doing so, it may be determined whether the execution of a processing action by the processing device, has been performed as expected, or, in other words, whether a quality-related criterium has been met, for example. It may also be determined whether a carrier-related property, such as a possible rotation of the carrier during processing, functions as expected.

Optionally, the quality-related parameter of said step c) is determined at least partly based on a pre-determined reference quality parameter relating to the execution of the processing action on the slaughter product by the processing device. Said pre-determined reference quality parameter may have been correlated to an associated size-related parameter range. The parameters of steps b) and b1) may be size-related parameters. The parameters of steps b) and b1) may be related to a contour shape of the slaughter product.

In an embodiment, a plurality of product processing actions, such as cutting and deskinning, are defined wherein each of said actions is allocated to an associated size-related parameter range, the method further comprising the step of determining to which of said plurality of product processing actions the slaughter product belongs, based on the parameter determined according to step b). This way it may be determined whether a specific action has been correctly performed, or, whether it has been performed at all, for example.

In an embodiment, the method further comprises setting at least one processing parameter of a processing device upstream or downstream of the measuring device based on the parameter determined during step b). This way, one or more settings of the processing device may be pre-adjusted so that a more optimal processing action may be performed, or such a setting may be adjusted when it is determined downstream that a quality-related parameter relating to the processing action of the processing device falls below some threshold, for example.

The invention also relates to a measuring device according to claim 12.

Further, the invention relates to a system according to claim 13 for measuring a poultry slaughter product comprising:
- a transport device which has a plurality of successive carriers each for holding a slaughter product, the transport device in use transporting the slaughter product held by a carrier of said plurality of successive carriers in a transport direction along a transport trajectory defined by the transport device; and
- a measuring device, according to the invention as described above, for measuring a poultry slaughter product, wherein the measuring device is positioned stationary along the transport trajectory such that the slaughter product held by the carrier is transported past the measuring device;
the measuring device comprising a control unit arranged for:
a) measuring distances, using a contactless distance meter of the measuring device, between the distance meter and the slaughter product, at at least three different locations on the slaughter product; and
b) determining a parameter of the slaughter product from said measured distances.

In the device and system according to the invention, the control unit is arranged for executing the method according to the invention as described above.

Effects of the measuring device and system are the same or at least similar to the effects described above in relation to the method according to the invention.

The present invention is described hereinafter with reference to the accompanying highly schematic figures in which embodiments of the present invention are shown and in which like reference numbers indicate the same or similar elements.
Figure 1A shows, in top view, an embodiment of a measuring system according to the invention;
Figure 1B shows an a further embodiment of a measuring system according to the invention;
Figure 1C shows a still further embodiment of a measuring system according to the invention;
Figure 2A shows a part of the measuring system of figure 1A in more detail, in 3-dimensional view;
Figure 2B shows a part of the measuring system of figure 1A in more detail, in 3-dimensional view, in which a poultry slaughter product has been provided on a carrier of the system;
Figure 3A represents distance measurements on an empty carrier of the system of figure 1A;
Figure 3B represents distance measurements on a carrier of the system of figure 1A, the carrier holding a poultry slaughter product;
Figure 3C represents a cross-sectional area of the poultry slaughter product as such;
Figure 4 represents a cross-sectional area of the poultry slaughter product as such in a different state thereof in comparison with figures 3B and 3C; and
Figure 5 shows a flowchart of embodiments of methods according to the invention.

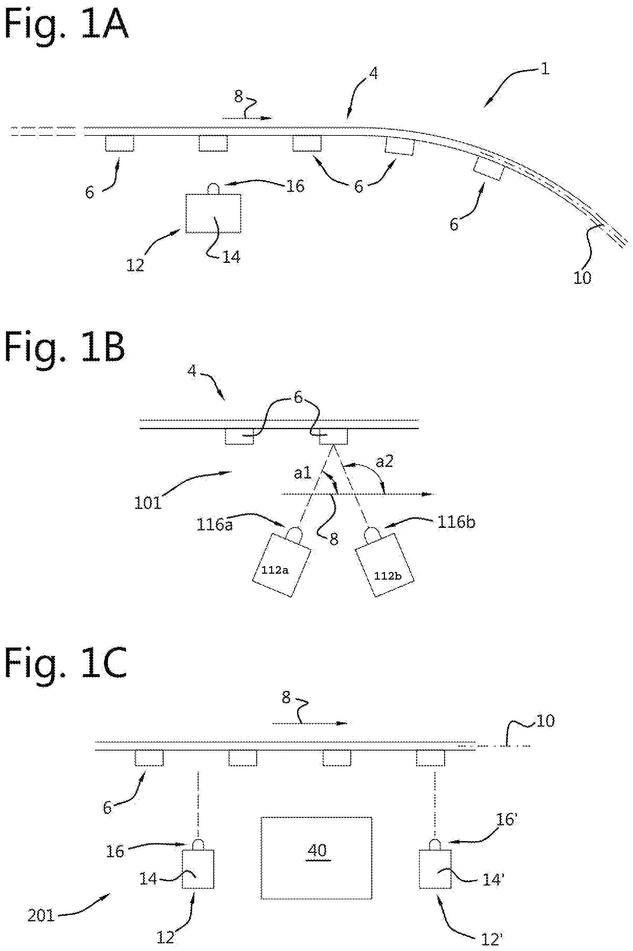

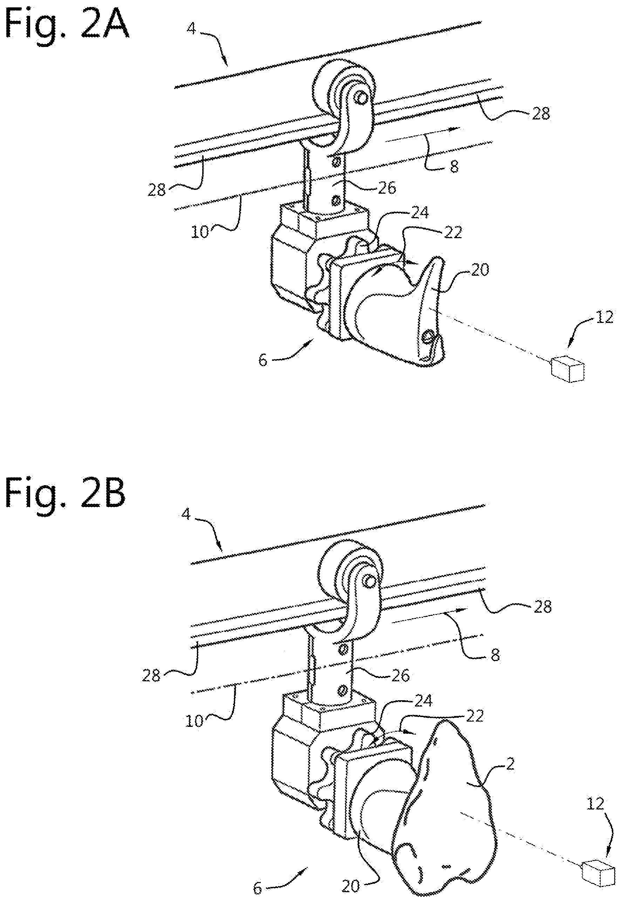

Figure 1A shows a system 1 for measuring a poultry slaughter product 2. In the example shown, the product 2 is a front halve of which the wings have already been removed. The system 1 comprises a transport device 4 which, as common in poultry slaughter product processing, has a plurality of successive carriers 6 each for holding a slaughter product 2 as figures 2A and 2B show. The carriers 6 are shown in figure 1A only very schematically. The successive carriers may be driven by a transport chain. The transport device 4 transports the slaughter products 2 each held by one of the successive carriers 6 in a transport direction 8 along a transport trajectory 10 defined by the transport device 4. The system also comprises a measuring device 12, for measuring a poultry slaughter product 2. The measuring device 12 is positioned stationary along the transport trajectory 10 such that the slaughter product 2 held by the carrier 6 is transported past the measuring device 12.

The carriers 6 may each have a poultry product holder body 20 which can be rotated about a horizontal rotation axis, the rotation indicated by reference numeral 22 and the rotation axis being perpendicular to the transport direction 8. Rotation may be imparted by driving the gear wheel 24 with suitable drive means. The carriers 6 further have a supporting arrangement 26 arranged to ride along a rail 28 of the transport device.

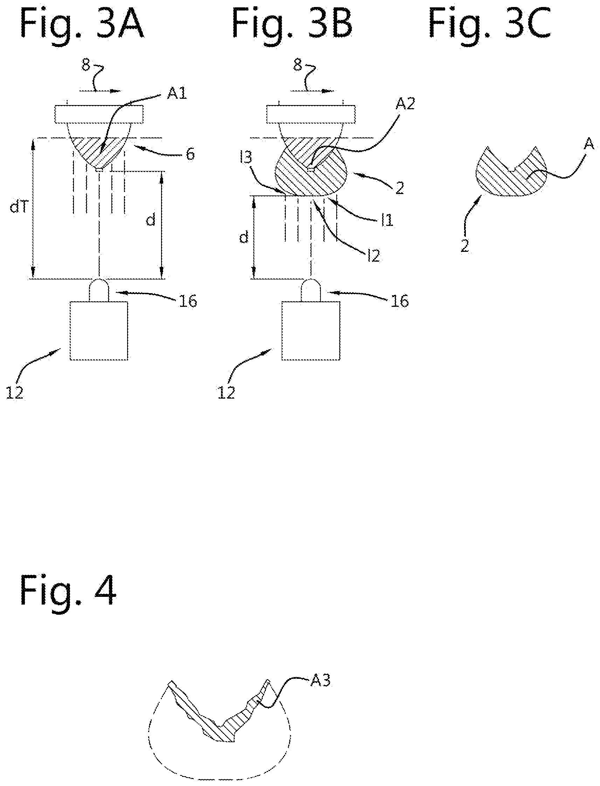

The measuring device 12 comprises a control unit 14 arranged for measuring distances d, using a contactless laser distance meter 16 of the measuring device 12, between the distance meter 16 and the slaughter product 2, at at least three different locations I1, I2, I3 on the slaughter product 2. See figure 3B, wherein measured distances are represented by the dashed lines. A measurement identified by I2 is just being measured, while a preceding measurement I1 has already been performed, as a consequence of the slaughter product 2 passing the measuring device 12 during the transporting by means of the transport device 4, in the transport direction 8. A subsequent measurement I3 still has to be performed. The laser distance meter 16 is a point laser meter but may a alternatively be a line distanced meter wherein a measuring plane is preferably oriented vertically, that means perpendicular to the transport direction.

The control unit 14 further is arranged for determining a size-related parameter, relating to a size of the slaughter product 2, from said measured respective distances d at the locations I1, I2, I3. The size-related parameter is related to a cross-sectional area A of the slaughter product 2 parallel to the transport direction 8. In practice, much more measurements will be performed on one and the same poultry slaughter product 2. The amount of measurements depends on a frequency of the measurements by the measuring device and on a speed of the poultry product passing the measuring device in the transport direction. The control unit 14 is arranged for executing methods according to the invention as will be described below.

In an alternative system 101 similar to system 1 and shown in figure 1B, two of such distance meters 116a, 116b, of respective measuring devices 112a, 112b, are used. The measuring devices 112a and b operate in the same manner as the measuring device 12. The two laser distance meters are oriented under a different angle a1 and a2 respectively, relative to the transport direction 8, with respect to the slaughter product 2. As shown, a first 116a of the two laser distance meters is oriented under an angle a1 having a component in the transport direction 8 while a second 116b of the at least two laser distance meters is oriented under an angle a2 having a component opposite to the transport direction 8. By doing so, a wider range of view may be obtained which results in a higher measuring accuracy in particular regarding forward facing and rearward facing zones (seen in the transport direction) of the product to be measured.

Embodiments of methods according to the invention, of measuring a poultry slaughter product 2, using a measuring device 12 described above, at least comprise the following steps:
a) measuring distances d, using the contactless distance meter 16 (or 116a, 116b, for example) of the measuring device 12, between the distance meter 16 and the slaughter product 2, at at least three different locations I1, I2, I3 on the slaughter product 2; and
b) determining a parameter A of the slaughter product 2 from the measured distances d of step a).

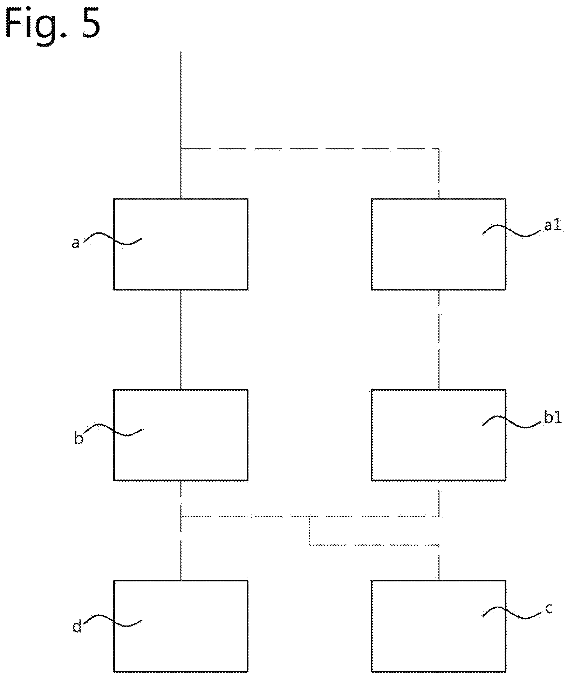

See also figure 5, in which optional method steps have been indicated by the dashed lines.

The measuring device 12 may be arranged to continuously measure distances, which means not only when a carrier passes the measuring device, wherein step a) is triggered by a measured distance d falling below a predetermined upper distance threshold dT. As figure 3A shows, the threshold dT may be a distance up to a predefined location on the carrier 6. This way, it may be automatically detected when a carrier passes the measuring device 12 so that measurements in the sense of the above step a) may commence. As mentioned above, the parameter A may be a size-related parameter related to a cross-sectional area of the slaughter product 2 parallel to the transport direction 8.

The step b) comprises determining a size-related parameter which at least partly depends on a pre-determined reference parameter A1 relating to a cross-sectional area, of the carrier 6 holding the slaughter product 2. This is shown in figure 3A, where, as a reference measurement, an empty carrier 6 is being measured by the measuring device 12. This means that the size-related parameter A can then be determined by subtracting the parameter A1 from a parameter A2, wherein parameter A2 represents a measurement of a carrier holding a slaughter product 2, as figure 3B shows. The parameter A2 thus relates to a cross-sectional area of a combination of the carrier 6 holding the slaughter product 2 and of the product 2 itself. The resulting parameter A, resulting from subtracting A1 from A2, thus relates to a cross-sectional area of the slaughter product 2 as such, as represented in figure 3C.

Such determination of the parameter A may in an analogous manner be performed using the above-described system 101.

In an embodiment, the method may further have an optional additional step d), wherein at least two classes C1, C2 are defined of consecutive parameter ranges. During such a step d), it is determined to which of said at least two classes the slaughter product belongs, based on the parameter determined according to step b).

Figure 1C shows an embodiment of a system according to the invention, having a poultry processing device 40. This may for example be a fillet harvesting device. The measuring device 12 is positioned along the transport trajectory 10 upstream of the processing device 40. The system also has a downstream measuring device 12' positioned along the transport trajectory 10 downstream of the processing device 40. The device 12' also has a laser distance meter 16' and a control unit 14' and operates in the same manner as the device 12. The method comprises, in addition to steps a) and b) above, the further steps of:
a1) measuring distances d, using the downstream laser distance meter 16' of the downstream measuring device 12', between the downstream distance meter 16' and the slaughter product 2, at at least three different locations on the slaughter product; and
b1) determining a parameter, preferably a mentioned size-related parameter, of the slaughter product from the measured distances of step a1).

The latter at least three different locations measured during step a1) are preferably the same as those of stap a), or at least measurements at a same vertical height so that a directly comparable cross-sectional area of the poultry slaughter product may be determined in steps b) and b1). The method further comprises the step:
c) determining a quality-related parameter of the slaughter product relating to the execution of a processing action on the slaughter product by the processing device, which quality-related parameter at least partly depends on the respective parameters determined in step b) and in step b1). An example of such a quality-related parameter may be a parameter relating to the presence - or not - of fillets on the poultry slaughter products. After the fillets have been removed using the processing device 40, the cross-sectional shape of the poultry slaughter product will be quite different than before. Such a shape, having the fillets removed, is represented in figure 4, its cross-section identified by A3. The outer shape of the product prior to the processing at the processing device is indicated by the dashed line. That shape will thus be measured using the - upstream - measuring device 12. The substantially reduced contour, as a result of the fillet harvesting, will then be measured using the downstream measuring device 12'. This way, it may be determined, for example, whether both fillets have been correctly removed, and/or what must have been the size of the removed fillets, both constituting quality-related parameters.

Optionally, the determination of step c) may also be dependent on a pre-determined reference quality parameter relating to the execution of the processing action on the slaughter product by the processing device. Such pre-determined reference quality parameter may for example be set using a plurality of measurements on products which have also been manually reviewed.

In addition, a parameter determined during step b) may be used as input for a processing parameter of a processing device upstream or downstream of the measuring device. For example, when the parameter indicates that the product at issue is a 'small' product, cutters of a downstream cutting processing device may be adjusted for that purpose. When a parameter indicates that fillets are sometimes not completely removed from the carcass of the poultry slaughter product, for example, harvesting tools, such as scrapers, of an upstream processing device may be adjusted after which the parameters as determined for multiple processed products are evaluated again, possibly resulting in another iteration of adjusting some tool of the upstream processing device.

The foregoing description provides embodiments of the invention by way of example only. The scope of the present invention is defined by the appended claims. One or more of the objects of the invention are achieved by the appended claims.

## Claims

1. A method of measuring a poultry slaughter product (2), using a measuring device positioned stationary along a transport trajectory (10) defined by a transport device (4) which has a plurality of successive carriers (6) each for holding a slaughter product, the transport device in use transporting the slaughter product held by a carrier of said plurality of successive carriers in a transport direction (8) along the transport trajectory, past the measuring device (12);
the method comprising:
a) measuring distances (d), using a contactless distance meter (16, 116a, 116b) of the measuring device, between the distance meter and the slaughter product, at at least three different locations (I1, I2, I3) on the slaughter product; and
b) determining a size-related parameter (A) of the slaughter product from the measured distances of step a),
**characterized in that:** the carriers (6) are in the form of cones, and the method comprises the steps of:
- determining a pre-determined reference parameter (A1) relating to the carrier (6) by letting an empty carrier (6) pass the measuring device (12) and performing measurements analogue to the measurements of step a); and
- the step of determining the size-related parameter (A) of the poultry slaughter product (2) as such comprises subtracting said pre-determined reference parameter (A1) from a size-related parameter (A2), determined during step b) for the carrier holding the slaughter product.

2. The method according to claim 1, wherein said step a) of measuring is executed using a laser distance meter.

3. The method according to claim 1 or 2, wherein said step a) comprises:
successively measuring said distances at said at least three different locations on the slaughter product as a consequence of the slaughter product passing the measuring device during the transporting by means of the transport device.

4. The method according to any one of the preceding claims, wherein step a) is triggered by a measured distance falling below a predetermined upper distance threshold.

5. The method according to any one of the preceding claims, wherein the size-related parameter is related to a cross-sectional area of the slaughter product parallel to the transport direction.

6. The method according to any of the preceding claims, wherein said step b) comprises:
determining a size-related parameter which at least partly depends on a pre-determined reference parameter relating to a size, preferably relating to a cross-sectional area, of the carrier (6) holding the slaughter product (2).

7. The method according to any one of the preceding claims, wherein at least two classes are defined of consecutive parameter ranges,
the method further comprising the step of:
d) determining to which of said at least two classes the slaughter product belongs, based on the parameter determined according to step b).

8. The method according to any one of the preceding claims, wherein step a) is executed using a plurality, preferably two or three, of said contactless distance meters, preferably laser distance meters,
wherein each of the plurality of contactless distance meters is oriented under a different angle, preferably relative to the transport direction, with respect to the slaughter product.

9. The method of claim 8, wherein step a) is executed using at least two laser distance meters, a first of the at least two laser distance meters being oriented under an angle having a component in the transport direction while a second of the at least two laser distance meters being oriented under an angle having a component opposite to the transport direction.

10. The method according to any one of the preceding claims, wherein:
- the measuring device is positioned along the transport trajectory upstream of a processing device;
- a downstream measuring device is positioned along the transport trajectory downstream of the processing device, and
the method comprising the further steps of:
a1) measuring distances, using a downstream contactless distance meter of the downstream measuring device, between the downstream distance meter and the slaughter product, at at least three different locations on the slaughter product;
b1) determining a parameter of the slaughter product from the measured distances of step a1).
the method further comprising the step:
c) determining a quality-related parameter of the slaughter product relating to the execution of a processing action on the slaughter product by the processing device, which quality-related parameter at least partly depends on the respective parameters determined in step b) and in step b1).

11. The method according to any one of the preceding claims, further comprising
setting at least one processing parameter of a processing device upstream or downstream of the measuring device based on the parameter determined during step b).

12. A measuring device (12, 112a, 112b) for measuring a poultry slaughter product (2), wherein, during use, the measuring device is positioned stationary along a transport trajectory (10) defined by a transport device (4) which has a plurality of successive carriers (6) each for holding a slaughter product, the transport device in use transporting the slaughter product held by a carrier of said plurality of successive carriers in a transport direction (8) along the transport trajectory, past the measuring device,
the measuring device comprising a control unit (14) arranged for:
a) measuring distances (d), using a contactless distance meter (16, 116a, 116b) of the measuring device, between the distance meter and the slaughter product, at at least three different locations (I1, I2, I3) on the slaughter product;
b) determining a parameter (A) of the slaughter product from said measured distances,
**characterized in that** the carriers (6) are in the form of cones, and the control unit is arranged for executing the method according to any one of the preceding claims 1 - 11.

13. A system for measuring a poultry slaughter product, comprising:
- a transport device which has a plurality of successive carriers each for holding a slaughter product, the transport device in use transporting the slaughter product held by a carrier of said plurality of successive carriers in a transport direction along a transport trajectory defined by the transport device; and
- a measuring device, according to claim 12, for measuring a poultry slaughter product, wherein the measuring device is positioned stationary along the transport trajectory such that the slaughter product held by the carrier is transported past the measuring device;
the measuring device comprising a control unit arranged for:
a) measuring distances, using a contactless distance meter of the measuring device, between the distance meter and the slaughter product, at at least three different locations on the slaughter product; and
b) determining a parameter of the slaughter product from said measured distances.

## Patentansprüche

1. Verfahren zum Messen eines Geflügelschlachtprodukts (2) unter Verwendung einer Messvorrichtung, die stationär entlang einer Transportbahn (10) positioniert ist, die durch eine Transportvorrichtung (4) definiert ist, die eine Vielzahl von aufeinanderfolgenden Trägern (6) jeweils zum Halten eines Schlachtprodukts aufweist, wobei die Transportvorrichtung im Gebrauch das durch einen Träger der Vielzahl von aufeinanderfolgenden Trägern gehaltene Schlachtprodukt in einer Transportrichtung (8) entlang der Transportbahn an der Messvorrichtung (12) vorbei transportiert;
wobei das Verfahren Folgendes umfasst:
a) Messen von Abständen (d), unter Verwendung eines berührungslosen Abstandsmessers (16, 116a, 116b) der Messvorrichtung, zwischen dem Abstandsmesser und dem Schlachtprodukt an mindestens drei verschiedenen Stellen (l1, l2, l3) auf dem Schlachtprodukt; und
b) Bestimmen eines größenbezogenen Parameters (A) des Schlachtprodukts aus den gemessenen Abständen von Schritt a),
**dadurch gekennzeichnet, dass:** die Träger (6) in der Form von Kegeln vorliegen und das Verfahren die folgenden Schritte umfasst:
- Bestimmen eines vorbestimmten Referenzparameters (A1) in Bezug auf den Träger (6), indem man einen leeren Träger (6) die Messvorrichtung (12) passieren lässt und Messungen analog zu den Messungen von Schritt a) durchführt; und
- der Schritt des Bestimmens des größenbezogenen Parameters (A) des Geflügelschlachtprodukts (2) als solches Subtrahieren des vorbestimmten Referenzparameters (A1) von einem größenbezogenen Parameter (A2) umfasst, der während Schritt b) für den Träger, der das Schlachtprodukt hält, bestimmt wird.

2. Verfahren gemäß Anspruch 1, wobei der Schritt a) des Messens unter Verwendung eines Laserabstandsmessers ausgeführt wird.

3. Verfahren gemäß Anspruch 1 oder 2, wobei der Schritt a) Folgendes umfasst:
aufeinanderfolgendes Messen der Abstände an den mindestens drei verschiedenen Stellen auf dem Schlachtprodukts als Folge davon, dass das Schlachtprodukt während des Transportieren mittels der Transportvorrichtung die Messvorrichtung passiert.

4. Verfahren gemäß einem der vorhergehenden Ansprüche, wobei Schritt a) dadurch ausgelöst wird, dass ein gemessener Abstand unter einen vorbestimmten oberen Abstandsschwellenwert fällt.

5. Verfahren gemäß einem der vorhergehenden Ansprüche, wobei sich der größenbezogene Parameter auf eine Querschnittsfläche des Schlachtprodukts parallel zu der Transportrichtung bezieht.

6. Verfahren gemäß einem der vorhergehenden Ansprüche, wobei Schritt b) Folgendes umfasst:
Bestimmen eines größenbezogenen Parameters, der mindestens teilweise von einem vorbestimmten Referenzparameter in Bezug auf eine Größe, vorzugsweise in Bezug auf eine Querschnittsfläche, des Trägers (6), der das Schlachtprodukt (2) hält, abhängt.

7. Verfahren gemäß einem der vorhergehenden Ansprüche, wobei mindestens zwei Klassen von fortlaufenden Parameterbereichen definiert sind,
wobei das Verfahren ferner den folgenden Schritt umfasst:
d) Bestimmen, zu welcher der mindestens zwei Klassen das Schlachtprodukt gehört, basierend auf dem gemäß Schritt b) bestimmten Parameter.

8. Verfahren gemäß einem der vorhergehenden Ansprüche, wobei Schritt a) unter Verwendung einer Vielzahl, vorzugsweise zwei oder drei, der berührungslosen Abstandsmesser, vorzugsweise Laserabstandsmesser, ausgeführt wird,
wobei jeder aus der Vielzahl von berührungslosen Abstandsmessern unter einem unterschiedlichen Winkel, vorzugsweise bezüglich der Transportrichtung, in Bezug auf das Schlachtprodukt ausgerichtet ist.

9. Verfahren nach Anspruch 8, wobei Schritt a) unter Verwendung von mindestens zwei Laserabstandsmessern ausgeführt wird, wobei ein erster der mindestens zwei Laserabstandsmesser in einem Winkel mit einer Komponente in der Transportrichtung ausgerichtet ist, während ein zweiter der mindestens zwei Laserabstandsmesser in einem Winkel mit einer Komponente entgegengesetzt zu der Transportrichtung ausgerichtet ist.

10. Verfahren gemäß einem der vorhergehenden Ansprüche, wobei:
- die Messvorrichtung entlang der Transportbahn stromaufwärts einer Verarbeitungsvorrichtung positioniert ist;
- eine stromabwärtige Messvorrichtung entlang der Transportbahn stromabwärts der Verarbeitungsvorrichtung positioniert ist und
wobei das Verfahren die weiteren folgenden Schritte umfasst:
a1) Messen von Abständen unter Verwendung eines stromabwärtigen berührungslosen Abstandsmessers der stromabwärtigen Messvorrichtung, zwischen dem stromabwärtigen Abstandsmesser und dem Schlachtprodukt an mindestens drei verschiedenen Stellen auf dem Schlachtprodukt;
b1) Bestimmen eines Parameters des Schlachtprodukts aus den gemessenen Abständen von Schritt a1),
wobei das Verfahren ferner den folgenden Schritt umfasst:
c) Bestimmen eines qualitätsbezogenen Parameters des Schlachtprodukts bezüglich der Ausführung einer Verarbeitungshandlung an dem Schlachtprodukt durch die Verarbeitungsvorrichtung, wobei der qualitätsbezogene Parameter mindestens teilweise von den jeweiligen in Schritt b) und in Schritt b1) bestimmten Parametern abhängt.

11. Verfahren gemäß einem der vorhergehenden Ansprüche, ferner umfassend
Einstellen mindestens eines Verarbeitungsparameters einer Verarbeitungsvorrichtung stromaufwärts oder stromabwärts der Messvorrichtung basierend auf dem während Schritt b) bestimmten Parameter.

12. Messvorrichtung(12, 112a, 112b) zum Messen eines Geflügelschlachtprodukts (2), wobei während des Gebrauchs die Messvorrichtung stationär entlang einer Transportbahn (10) positioniert ist, die durch eine Transportvorrichtung (4) definiert ist, die eine Vielzahl von aufeinanderfolgenden Trägern (6) jeweils zum Halten eines Schlachtprodukts aufweist, wobei die Transportvorrichtung im Gebrauch das durch einen Träger der Vielzahl von aufeinanderfolgenden Trägern gehaltene Schlachtprodukt in einer Transportrichtung (8) entlang der Transportbahn an der Messvorrichtung vorbei transportiert,
wobei die Messvorrichtung eine Steuereinheit (14) umfasst, die zu Folgendem angeordnet ist:
a) Messen von Abständen (d), unter Verwendung eines berührungslosen Abstandsmessers (16, 116a, 116b) der Messvorrichtung, zwischen dem Abstandsmesser und dem Schlachtprodukt an mindestens drei verschiedenen Stellen (l1, l2, l3) auf dem Schlachtprodukt;
b) Bestimmen eines Parameters (A) des Schlachtprodukts aus den gemessenen Abständen,
**dadurch gekennzeichnet, dass** die Träger (6) in der Form von Kegeln vorliegen und die Steuereinheit zum Ausführen des Verfahrens gemäß einem der vorhergehenden Ansprüche 1-11 angeordnet ist.

13. System zum Messen eines Geflügelschlachtprodukts, umfassend:
- eine Transportvorrichtung, die eine Vielzahl von aufeinanderfolgenden Trägern jeweils zum Halten eines Schlachtprodukts aufweist, wobei die Transportvorrichtung im Gebrauch das durch einen Träger der Vielzahl von aufeinanderfolgenden Trägern gehaltene Schlachtprodukt in einer Transportrichtung entlang einer durch die Transportvorrichtung definierten Transportbahn transportiert; und
- eine Messvorrichtung gemäß Anspruch 12 zum Messen eines Geflügelschlachtprodukts, wobei die Messvorrichtung stationär entlang der Transportbahn positioniert ist, sodass das durch den Träger gehaltene Schlachtprodukt an der Messvorrichtung vorbei transportiert wird;
wobei die Messvorrichtung eine Steuereinheit umfasst, die zu Folgendem angeordnet ist:
a) Messen von Abständen, unter Verwendung eines berührungslosen Abstandsmessers der Messvorrichtung, zwischen dem Abstandsmesser und dem Schlachtprodukt an mindestens drei verschiedenen Stellen auf dem Schlachtprodukt; und
b) Bestimmen eines Parameters des Schlachtprodukts aus den gemessenen Abständen.

## Revendications

1. Procédé de mesure d'un produit de boucherie de type volaille (2), en utilisant un dispositif de mesure positionné de manière stationnaire le long d'une trajectoire de transport (10) définie par un dispositif de transport (4) qui présente une pluralité de supports successifs (6) chacun pour contenir un produit de boucherie, le dispositif de transport, lors de l'utilisation, transportant le produit de boucherie contenu par un support de ladite pluralité de supports successifs dans une direction de transport (8) le long de la trajectoire de transport, au-delà du dispositif de mesure (12) ;
le procédé comprenant :
a) la mesure de distances (d), en utilisant un télémètre sans contact (16, 116a, 116b) du dispositif de mesure, entre le télémètre et le produit de boucherie, au niveau d'au moins trois emplacements différents (I1, I2, I3) sur le produit de boucherie ; et
b) la détermination d'un paramètre lié à la taille (A) du produit de boucherie à partir des distances mesurées de l'étape a),
**caractérisé en ce que :** les supports (6) se présentent sous la forme de cônes, et le procédé comprend les étapes de :
- détermination d'un paramètre de référence prédéterminé (A1) en lien avec le support (6) en laissant un support vide (6) passer devant le dispositif de mesure (12) et en réalisant des mesures analogues aux mesures de l'étape a) ; et
- l'étape de détermination du paramètre lié à la taille (A) du produit de boucherie de type volaille (2) en tant que tel comprend la soustraction dudit paramètre de référence prédéterminé (A1) d'un paramètre lié à la taille (A2), déterminé lors de l'étape b) pour le support contenant le produit de boucherie.

2. Procédé selon la revendication 1, dans lequel ladite étape a) de mesure est exécutée en utilisant un télémètre laser.

3. Procédé selon la revendication 1 ou 2, dans lequel ladite étape a) comprend :
la mesure successive desdites distances au niveau desdits au moins trois emplacements différents sur le produit de boucherie en conséquence du passage du produit de boucherie devant le dispositif de mesure lors du transport au moyen du dispositif de transport.

4. Procédé selon l'une quelconque des revendications précédentes, dans lequel l'étape a) est déclenchée par la descente d'une distance mesurée en dessous d'un seuil de distance supérieur prédéterminé.

5. Procédé selon l'une quelconque des revendications précédentes, dans lequel le paramètre lié à la taille est lié à une aire de section transversale du produit de boucherie parallèle à la direction de transport.

6. Procédé selon l'une quelconque des revendications précédentes, dans lequel ladite étape b) comprend :
la détermination d'un paramètre lié à la taille qui dépend au moins en partie d'un paramètre de référence prédéterminé en lien avec une taille, de préférence en lien avec une aire de section transversale, du support (6) contenant le produit de boucherie (2).

7. Procédé selon l'une quelconque des revendications précédentes, dans lequel au moins deux classes sont définies de plages de paramètres consécutives,
le procédé comprenant en outre l'étape de :
d) fait de déterminer à laquelle desdites au moins deux classes appartient le produit de boucherie, sur la base du paramètre déterminé selon l'étape b).

8. Procédé selon l'une quelconque des revendications précédentes, dans lequel l'étape a) est exécutée en utilisant une pluralité, de préférence deux ou trois, desdits télémètres sans contact, de préférence des télémètres laser,
dans lequel chacun de la pluralité de télémètres sans contact est orienté selon un angle différent, de préférence en lien avec la direction de transport, par rapport au produit de boucherie.

9. Procédé de la revendication 8, dans lequel l'étape a) est exécutée en utilisant au moins deux télémètres laser, un premier des au moins deux télémètres laser étant orienté selon un angle présentant une composante dans la direction de transport tandis qu'un second des au moins deux télémètres laser est orienté selon un angle présentant une composante opposée à la direction de transport.

10. Procédé selon l'une quelconque des revendications précédentes, dans lequel :
- le dispositif de mesure est positionné le long de la trajectoire de transport en amont d'un dispositif de traitement ;
- un dispositif de mesure aval est positionné le long de la trajectoire de transport en aval du dispositif de traitement, et
le procédé comprenant les étapes supplémentaires de :
a1) mesure de distances, en utilisant un télémètre sans contact en aval du dispositif de mesure en aval, entre le télémètre en aval et le produit de boucherie, au niveau d'au moins trois emplacements différents sur le produit de boucherie ;
b1) détermination d'un paramètre du produit de boucherie à partir des distances mesurées de l'étape a1),
le procédé comprenant en outre l'étape de :
c) détermination d'un paramètre lié à la qualité du produit de boucherie en lien avec l'exécution d'une action de traitement sur le produit de boucherie par le dispositif de traitement, lequel paramètre lié à la qualité dépend au moins en partie des paramètres respectifs déterminés à l'étape b) et à l'étape b1).

11. Procédé selon l'une quelconque des revendications précédentes, comprenant en outre
le réglage d'au moins un paramètre de traitement d'un dispositif de traitement en amont ou en aval du dispositif de mesure sur la base du paramètre déterminé lors de l'étape b).

12. Dispositif de mesure (12, 112a, 112b) pour mesurer un produit de boucherie de type volaille (2), dans lequel, lors de l'utilisation, le dispositif de mesure est positionné de manière stationnaire le long d'une trajectoire de transport (10) définie par un dispositif de transport (4) qui présente une pluralité de supports successifs (6) chacun pour contenir un produit de boucherie, le dispositif de transport, lors de l'utilisation, transportant le produit de boucherie contenu par un support de ladite pluralité de supports successifs dans une direction de transport (8) le long de la trajectoire de transport, au-delà du dispositif de mesure,
le dispositif de mesure comprenant une unité de commande (14) agencée pour :
a) la mesure de distances (d), en utilisant un télémètre sans contact (16, 116a, 116b) du dispositif de mesure, entre le télémètre et le produit de boucherie, au niveau d'au moins trois emplacements différents (I1, I2, I3) sur le produit de boucherie ;
b) la détermination d'un paramètre (A) du produit de boucherie à partir desdites distances mesurées,
**caractérisé en ce que** les supports (6) se présentent sous la forme de cônes, et l'unité de commande est agencée pour exécuter le procédé selon l'une quelconque des revendications 1 à 11 précédentes.

13. Système de mesure d'un produit de boucherie de type volaille, comprenant :
- un dispositif de transport qui présente une pluralité de supports successifs chacun pour contenir un produit de boucherie, le dispositif de transport, lors de l'utilisation, transportant le produit de boucherie contenu par un support de ladite pluralité de supports successifs dans une direction de transport le long d'une trajectoire de transport définie par le dispositif de transport ; et
- un dispositif de mesure, selon la revendication 12, pour mesurer un produit de boucherie de type volaille, dans lequel le dispositif de mesure est positionné de manière stationnaire le long de la trajectoire de transport de sorte que le produit de boucherie contenu par le support est transporté au-delà du dispositif de mesure ;
le dispositif de mesure comprenant une unité de commande agencée pour :
a) la mesure de distances, en utilisant un télémètre sans contact du dispositif de mesure, entre le télémètre et le produit de boucherie, au niveau d'au moins trois emplacements différents sur le produit de boucherie ; et
b) la détermination d'un paramètre du produit de boucherie à partir desdites distances mesurées.
